# EUROPEAN PATENT APPLICATION

(11) **EP 2 444 455 A1**
(43) Date of publication of application: **25.04.2012**
(21) Application number: 10013864.3
(22) Date of filing: 21.10.2010
(51) Int. Cl.: C08K 3/04, C08L 23/08, H01B 1/24, H01B 9/02

(54) **A semiconductive polymer composition which contains epoxy-groups**

(71) Applicant: Borealis AG, 1220 Vienna (AT)
(72) Inventor: Fagrell, Ola, 44445 Stenungsund (SE); Piel, Christian, 4030 Linz (AT); Prieto, Oscar, 41252 Gothenburg (SE)
(74) Representative: Kador & Partner

(57) **Abstract**

The invention relates to a semiconductive polyolefin composition comprising,
- an olefin polymer (A) comprising epoxy-groups;
- a conductive filler; and

at least one crosslinking agent (B) which accelerates the crosslinking reaction of epoxy-groups.

## Description

The present invention relates to a semiconductive polyolefin composition comprising epoxy-groups, an article, preferably a cable layer which has been formed of said composition, a cable comprising said layer and a process for the production thereof and a process for the crosslinking thereof.

In power cables, such as power cables for medium voltage (6 to 36 kV) and high voltages (> 36 kV), the electric conductor is usually coated first with an inner semiconducting layer, followed by an insulating layer, then an outer semiconducting layer, followed by optional layer(s) such as water-barrier layer(s) and on the outside optionally sheath layer(s). The layers of the cable are commonly based on different types of ethylene polymers.

The insulating layer and the semiconducting layers normally consist of ethylene homo- and/or copolymers which are preferably cross-linked. LDPE (low density polyethylene, i.e. polyethylene prepared by radical polymerization at a high pressure) cross-linked with peroxide, e.g. dicumyl peroxide, in connection with the extrusion of the cable, has become the predominant cable insulating material. The inner semiconducting layer normally comprises an ethylene copolymer, such as an ethylene-vinyl acetate copolymer (EVA), ethylene methylacrylate copolymer (EMA), ethylene ethylacrylate copolymers (EEA), ethylene butylacrylate copolymer (EBA), cross-linking agent (e.g. peroxide) and sufficient amount and type of conductive filler to make the composition semiconductive. The composition of the outer semiconducting layer may differ from the composition of the inner semiconductive layer depending on whether it has to be strippable or not. If the outer semiconductive shall not be strippable the composition used can be of same type as for the inner semiconductive layer.

Although prior art compositions for semiconducting layers in electric cables are satisfactory for many applications, there is always a desire to improve their characteristics such as processability and cross-linking temperature and eliminate or reduce any disadvantages they may have.

One disadvantage of usual cable layers is that cross-linking of cable layers is accomplished using peroxides. Crosslinking using peroxides suffers from some disadvantages. For example low-molecular by-products are formed during crosslinking which have unpleasant odor. Furthermore, prior to the extrusion of the polyolefin composition the peroxide has to be added in a separate processing step into the polymer which increase the lead time. In addition, to achieve a high crosslinking degree, organic peroxide is required which release after peroxide degradation a high level of undesired by-products. The peroxide degradation temperature limits the maximum possible melt temperature in the extruder to about 140 °C. Above that temperature, crosslinking will occur in the extruder which will result in gel or scorch particles in the cable. However the max melt temperature at 140 °C in the extruder limits the extruder output and might result in a lower production speed.

Hence, it is the object of the present invention to provide a semiconductive polyolefin composition which can be crosslinked to the required crosslinking degree with a lower amount of peroxide or even without using peroxide at all.

Moreover, it is a further object of the present invention to provide a semiconductive composition which can be crosslinked at high temperature and at high cable line speed.

The above objects are achieved by the present invention by providing a semiconductive polyolefin composition comprising
- an olefin polymer (A) comprising epoxy-groups;
- a conductive filler; and
- at least one crosslinking agent (B) which accelerates the crosslinking reaction of epoxy-groups and which is selected from
   (i) Lewis acids,
   (ii) Brönsted acids different from carboxylic acids; or
   (iii) any mixtures thereof.

The semiconductive polyolefin composition of the invention is referred herein also shortly as polyolefin composition and the olefin polymer (A) comprising epoxy-groups is referred herein also shortly as olefin polymer (A).

Lewis acids or Brönsted acids as the crosslinking agent (B) are believed to catalyse the crosslinking reaction, but without a substantial net change in the amount of that substance in the system. Furthermore, at the molecular level, the crosslinking agent (B) is believed to be regenerated, at least partly, during each set of microscopic chemical events leading from a molecular entity of reactant to a molecular entity of product according to the definition of "catalyst" in IUPAC, Pure Appl. Chem., 66, 1077-1184 (1994) which is hereby incorporated by reference. Regenerate "at least partly" means that, as well known, the effect of the crosslinking agent may be influenced by the other components present in the polymer composition.

The used amount of the present crosslinking agent (B) can be chosen, depending on the desired catalytic effect.

It has been surprisingly found that the present new type of epoxy crosslinking agent (B) provides a superior crosslinkability of the epoxy groups. Therefore the amount of radical forming agents, like peroxide, can be reduced or completely avoided. Also the amount of volatile by-products formed during the crosslinking reaction is advantageously low. Thereby, the safety is improved and furthermore, the production lead time is decreased as an extra processing step, such as degassing step, can be reduced or avoided. Moreover, the obtained cables have less odor problems.

Hence, the polyolefin composition preferably contains at most 3.0 wt%, preferably less than 2.0 wt%, more preferably from 0 to less than 1.5 wt% of radical forming agents such as peroxides, even more preferably, the polyolefin composition is free of any added peroxide and most preferably, the polyolefin composition is free of any radical forming agents.

The polyolefin composition of the invention has also very good strippability properties which are advantageous e.g. in strippable semiconductive applications in wire and cable, wherein peelable semiconductive layers are desired.

The following preferable subgroups and variants of the components, i.e. olefin polymer (A), conductive filler crosslinking agent (B) or crosslinking agent (B1) can be combined in any order and apply naturally for the polyolefin composition as well as to cable, of the invention.

Preferably, crosslinking agent (B) is present in an amount of at least 0.05 wt%, more preferably of at least 0.1 wt% and most preferably of at least 0.2 wt%, based on the amount of olefin polymer (A) and crosslinking agent (B).

Crosslinking agent (B) is preferably present in an amount of 8.0 wt% or less, more preferably in an amount of 5.0 wt% or less and most preferably in an amount of 2.0 wt% or less, based on the amount of olefin polymer (A) and crosslinking agent (B).

The Lewis acids and Brönsted acids suitable as the crosslinking agent (B) are well known and commercially available or can be produced according to or analogously to a known literature.

Lewis acid as the crosslinking agent (B) is defined herein by a molecular entity (and the corresponding chemical species) that is an electron-pair acceptor and therefore able to react with a Lewis base to form a Lewis adduct, by sharing the electron pair furnished by the Lewis base.

Preferable Lewis acid is selected from compounds containing lanthanides or an element of groups 2 to 14 of the IUPAC periodic table (1989) except the elements of the group 7 of the IUPAC periodic table (1989) and Be, C, Si, Ge, Tl, Pb, Tc, Hg and Cd. In the present invention lanthanides are lanthanum, cerium, praseodymium, neodymium, samarium, europium, gadolinium, terbium, dysprosium, holmium, erbium, thulium, ytterbium or lutetium.

More preferable Lewis acids are compounds of the following formula (I)

M^{+m}Lₙ (I)

, wherein
M is an element selected from lanthanides or an element of groups 2 to 14 of the IUPAC periodic table (1989) except the elements of the group 7 of the IUPAC periodic table (1989) and Be, C, Si, Ge, Tl, Pb, Tc, Hg and Cd, each L is the same or different and is a ligand linked to M; and
m is 1 to 4, and n is 1 to 4, with the proviso that m-n is 0.

Integer "n" thus depends on the oxidation state +m and is chosen to provide a net charge of the compound M+m Ln to be 0.

In a more preferable subgroup of Lewis acids of compounds of formula (I):
M is selected from lanthanides and an element of the groups 4, 11, 12, 13 and 14 of the IUPAC periodic table (1989) except the elements of the group 7 of the IUPAC periodic table (1989) and C, Si, Ge, Tl, Pb, Tc, Hg and Cd, more preferably M is an element selected from group 4, 11, 12, 13 or 14 as defined above, more preferably M is selected from Ti (titanium), Zr (zirconium), Hf (hafnium), Sn (tin), Al (aluminium), Cu (copper), Zn (zinc) and B(boron), more preferably M is Ti, Al, Sn, Zn or Cu, most preferably M is Ti, Zn, Cu or Al, and, even more preferably from Ti or Al;
each L is independently selected from
   - optionally substituted saturated or partially unsaturated hydrocarbyl group;
   - optionally substituted aromatic hydrocarbyl ring system;
   - two or more L are independently a divalent saturated or partially unsaturated hydrocarbyl group linked to the other ligand(s) L via a X atom and form together with M a ring system which may optionally be substituted, X is carbon or a hetero atom;
   - wherein each hydrocarbyl group as L or in a ring system formed by two or more L may independently contain one or more hetero atoms selected from N, O, P, S or Si, preferably from one or more of N, O, P, and
   - wherein the number of optional substituents, if present in any of L or the ring system formed by two or more L, is independently 1 to 4;
   - OH group;
   - halogen, preferably -F, -Cl, -Br, group;
   - CF₃SO₃- group;
   - methyl or ethyl methanesulfonate group; and
m is 2 or 4, and n is 2 or 4 provided that m-n is 0.

The term "optional" in the present invention means "may or may not be present", e.g. "optionally substituted" covers the possibilities that a substituent is present or is not present. The term "unsubstituted" naturally means that no substituent is present.

The below preferred subgroups of compounds of formula (I) are generalisable in any combination(s):

The position of the heteroatom in optionally substituted linear or branched saturated partially unsaturated hydrocarbyl group or in optionally substituted aromatic hydrocarbyl ring system or in the ring system formed by two or three or more L together with M is not limited. Accordingly, any hydrocarbyl may be linked to M via a heteroatom and/or the carbon atoms of any hydrocarbyl can be interrupted by one or more heteroatoms.

The optional substituents may be attached to a carbon or a hetero atom of the hydrocarbyl group. The optional substituents are selected independently from a functional group which is preferably selected from one or more of =O, -OH, NR¹R², wherein R¹ or R² are H or C1-C12 alkyl; - COOR⁴, wherein R⁴ is H or C1-C12 alkyl -CONR⁵, wherein R⁵ is H or C1-C12 alkyl; halogen, which is preferably F, Cl or Br, -OH; methyl or ethyl methanesulfonate; CF₃SO₃- or from a hydrocarbyl with up to 20 carbon atoms in case of any ring system present in or formed by the hydrocarbyl.

Any ring system present in L or formed by two or more L can be mono cyclic or polycyclic ring system. Polycyclic means fused ring systems and also ring systems formed by three L ligands linked to each other via X and M. In case of two or more L form a ring system, the ring can be saturated, partially unsaturated or aromatic, preferably saturated. The number of ring atoms in any ring system is Preferable 5 to 14.

In the preferable subgroup of compounds of formula (I) the substituted or unsubstituted saturated or partially unsaturated hydrocarbyl group as L is more preferably
(i) an optionally substituted linear or branched, saturated or partially unsaturated hydrocarbyl group with up to 30 carbon atoms; more preferably linear or branched C1-C20 alkyl, linear or branched C2-C20 alkenyl or linear or branched C2-C20 alkynyl, more preferably linear or branched C1-C20 alkyl, linear or branched C2-C20 alkenyl;
(ii) an optionally substituted linear or branched, saturated or partially unsaturated hydrocarbyl group which bears a saturated or partially unsaturated cyclic hydrocarbyl moiety or an optionally substituted linear or branched, saturated or partially unsaturated hydrocarbyl group which bears an aromatic hydrocarbyl moiety; preferably an optionally substituted linear or branched, saturated or partially unsaturated hydrocarbyl group which bears a saturated or partially unsaturated cyclic hydrocarbyl moiety; or
(iii) an optionally substituted saturated or partially unsaturated cyclic hydrocarbyl group wherein one or more ring atoms are optionally a heteroatom selected from N, O, P, S or Si, preferably N, O or P.

Any optionally substituted cyclic hydrocarbyl group is preferably saturated and contains 5 to 7 ring atoms. Any optionally substituted aromatic ring system is preferably an optionally substituted phenyl, naphthyl or anthracene ring system.

More preferable subgroup is compounds of formula (I), wherein the substituted or unsubstituted saturated or partially unsaturated hydrocarbyl group as L is
(i) an optionally substituted linear or branched, saturated or partially unsaturated hydrocarbyl group; more preferably linear or branched C1-C20 alkyl, linear or branched C2-C20 alkenyl or linear or branched C2-C20 alkynyl, more preferably linear or branched C1-C20 alkyl or linear or branched C2-C20 alkenyl;
(ii) an optionally substituted linear or branched, saturated or partially unsaturated hydrocarbyl group which bears a saturated or partially unsaturated cyclic hydrocarbyl moiety or an optionally substituted linear or branched, saturated or partially unsaturated hydrocarbyl group which bears an optionally substituted aromatic hydrocarbyl moiety; preferably an optionally substituted linear or branched, saturated or partially unsaturated hydrocarbyl group which bears a saturated or partially unsaturated cyclic hydrocarbyl moiety; or
(iii) an optionally substituted saturated or partially unsaturated cyclic hydrocarbyl group wherein one or more ring atoms are optionally a heteroatom selected from N, O, P, S or Si (preferably N, O or P).

Even in more preferable subgroup of compounds of formula (I):
M is Ti, Zr, Hf, Sn, Cu, Zn or Al, preferably Ti, Sn, Zn, Cu or Al;
each L is a group comprising 1 to 30 carbon atoms and selected independently from optionally substituted hydrocarbyl with no hetero atoms; optionally substituted -O-hydrocarbyl group; -O-(C=O)-hydrocarbyl group; -O-(P=O)-hydrocarbyl group; or two or three L are -O-hydrocarbyl-linked to each other via a X atom, which is C or N atom, and form together with M a cyclic ring system; wherein each hydrocarbyl is independently as defined above; and
n is 4 in case of Ti, Zr, Hf or Sn; 3 in case of Al or B; and 2 in case of Cu or Zn.

In the most preferable Lewis acids as the crosslinking agent (B) is the subgroup of compounds of formula (I), wherein
M is Ti, Sn, or Al, and most preferably Ti or Al;
each L is a hydrocarbyl group selected independently form
-linear or branched C1-C20 alkyl optionally bearing one or two, preferably one, if present, substituent(s) as defined above, preferably linear or branched C1-C20 alkyl;
- -O-(linear or branched C1-C20 alkyl) optionally bearing one or two, preferably one, if present, substituent(s) as defined above, -O-(linear or branched C2-C20 alkenyl) optionally bearing one or two, preferably one, if present, substituent(s) as defined above, more preferably -O-(linear or branched C2-C20 alkenyl) optionally and preferably bearing one or two, preferably one, substituent which is preferably (=O);
- -O-(P=O)-(linear or branched C1-C20 alkyl) optionally bearing one or two, preferably one, if present, substituent(s) as defined above, -O-(P=O)-(linear or branched C2-C20 alkenyl) optionally bearing one or two, preferably one, if present, substituent(s) as defined above, more preferably O-(P=O)-(linear or branched C1-C20 alkyl); or
- three L are independently -O-ethylene- each linked to X which is N and the three L form together with M a polycyclic ring system; and
n is 4 in case of Ti, Zr, Hf or Sn, 3 in case of Al or B and 2 in case of Cu or Zn.

In the above preferable subgroup of the compounds of formula (I) in case three L are independently -O-ethylene- each linked to X which is N and the three L form together with M a polycyclic ring system, then m is preferably Ti, n is 4 and the remaining L is-O-( linear or branched (C1-12)alkyl), preferably -O-(linear or branched (C1-6)alkyl).

Examples for particularly preferred Lewis acids as the crosslinking agent (B) are (triethanolatoamine)Ti-O-R20 wherein R20 is a linear or branched (C1-12)alkyl), preferably a linear or branched (C1-6)alkyl), such as triethanolatoamine titanium isopropanolate (CAS number 74665-17-1). Further particularly preferred Lewis acids are zirconium tetrabutanolate (CAS number 1071-76-7), tris(diethylphosphinato)aluminium (CAS number 225789-38-8 ), Aluminum distearate (CAS number 300-92-5), Dioctyltindilaureate (CAS number 3648-18-81), titanium tristearate monoisopropanolate, zinc (II) acetylacetonate hydrate (CAS number 108503-47-5), copper (II) acetylacetonate (CAS number: 13395-16-9), titanium diacetylacetonate diisopropanolate (CAS number: 27858-32-8), Titanium(IV) butoxide (CAS number 5593-70-4), Titanium diisopropoxide bis(acetylacetonate) (CAS number 17927-72-9), Titanium isopropoxide (4) (CAS number 546-68-9); Tetrakis(2-ethylhexyl) orthotitanate (CAS number 1070-10-6), Tetrakis(triethanolaminato)zirconium(IV) (CAS number 101033-44-7), Zinc stearate (CAS number 557-05-1), Boron trifluoride ethylamine complex (CAS number 75-23-0). Most preferred Lewis acid is selected from triethanolatoamine titanium isopropanolate (CAS number 74665-17-1); tris(diethylphosphinato)aluminum (CAS number 225789-38-8 ); Titanium diisopropoxide bis(acetylacetonate) (CAS number 17927-72-9); Dioctyltindilaureate (CAS number 3648-18-81); Zinc (II) acetylacetonate hydrate (CAS number 108503-47-5) ; and - Copper(II) acetylacetonate CAS number 13395-16-9. Even most preferred Lewis acid is selected from triethanolatoamine titanium isopropanolate (CAS number 74665-17-1).

In yet another preferred embodiment each L is a group selected independently form
- linear or branched C1-C20 alkyl optionally bearing one or two, preferably one, if present, substituent(s) as defined above, preferably linear or branched C1-C20 alkyl;
- -O-(linear or branched C1-C20 alkyl) optionally bearing one or two, preferably one, if present, substituent(s) as defined above, - O-(linear or branched C2-C20 alkenyl) optionally bearing one or two, preferably one, if present, subsitutuent(s) as defined above, more preferably -O-(linear or branched C2-C20 alkenyl) optionally and preferably bearing one or two, preferably one, subsitutuent which is preferably (=O);
- -O-(P=O)-(linear or branched C1-C20 alkyl) optionally bearing one or two, preferably one, if present, substituent(s) as defined above, -O-(P=O)-(linear or branched C2-C20 alkenyl) optionally bearing one or two, preferably one, if present, substituent(s) as defined above, more preferably O-(P=O)-(linear or branched C1-C20 alkyl); or
- three L are independently -O-ethylene- each linked to X which is N and the three L form together with M a polycyclic ring system; and

As to Brönsted acids as the crosslinking agent (B), Brönsted acid is defined herein to be a compound which acts as a proton donor. Preferred Brönsted acids as the crosslinking agent (B) are sulphonic acids or any anhydrides or other derivatives thereof, more preferably an organic sulphonic acid, more preferably, a hydrocarbyl group substituted with at least one sulphonic acid substituent (including CF₃-SO₂-O-SO₂-CF₃ and CH₃-SO₂-CH₃) or an aromatic hydrocarbyl ring system bearing at least one sulphonic acid substituent and optionally further substituents, preferably bearing one or more hydrocarbyl substituent up to 50 carbon atoms. The aromatic hydrocarbyl ring system and hydrocarbyl are as defined above for Lewis acid. In the organic sulphonic acid, one, two or more sulphonic acid groups may be present. Suitable sulphonic acids as the crosslinking agent (B) are for examples thosed used as silane condensation catalysts and described e.g. in EP736065, EP1849816, EP1309631, EP1309632, US6441097B and US2008097038A.

The more preferred Brönsted acid as the crosslinking agent (B) is the aromatic organic sulphonic acid which comprises the structural element:

Ar(SO₃H)ₓ (II)

wherein Ar is an aryl group which may be substituted or non- substituted, and if substituted, then preferably with at least one hydrocarbyl group up to 50 carbon atoms, and x being at least 1, or a precursor of the sulphonic acid of formula (II) including an acid anhydride thereof or a sulphonic acid of formula (II) that has been provided with a hydrolysable protective group(s), e.g. an acetyl group that is removable by hydrolysis.

The sulphonic acid of formula (II) as the crosslinking agent (B) may comprise the structural unit according to formula (II) one or several times, e.g. two or three times (as a repeating unit (II)). For example, two structural units according to formula (II) may be linked to each other via a bridging group such as an alkylene group.

Preferably, in the sulphonic acid of formula (II) as the crosslinking agent (B) formula (II) x is 1, 2 or 3, and more preferably x is 1 or 2.

More preferably, compounds of formula (II), wherein Ar is a phenyl group, a naphthalene group or an aromatic group comprising three fused rings such as phenantrene and anthracene.

Furthermore preferably, the organic aromatic sulphonic acid of formula (II) as the more preferred Brönsted acid as crosslinking agent (B) has from 6 to 200 C-atoms, more preferably from 7 to 100 C-atoms.

Non-limiting examples of sulphonic acid compounds of formula (II) are p-toluene sulphonic acid, 1-naphtalene sulfonic acid, 2-naphtalene sulfonic acid, acetyl p-toluene sulfonate, acetylmethane-sulfonate, dodecyl benzene sulphonic acid, octadecanoyl-methanesulfonate and tetrapropyl benzene sulphonic acid; which each independently can be further substituted.

Even more preferable Brönsted acid as the crosslinking agent (B) is the sulphonic acid of formula (II), which is substituted, i.e. Ar is an aryl group which is substituted with at least one C1 to C30-hydrocarbyl group. In this more preferable subgroup of the sulphonic acid of formula (II), it is furthermore preferable that Ar is a phenyl group and x is at least one (i.e. phenyl is substituted with at least one -S(=O)₂OH), more preferably x is 1, 2 or 3, and more preferably x is 1 or 2.

The most preferred sulphonic acid as the crosslinking agent (B) is the sulphonic acid (II) which is a p-toluene sulphonic acid, i.e. 1-methyl, 4-S(=O)₂OH benzene, e.g. p-toluene sulphonic acid (CAS number 6192-52-5).

The most preferred crosslinking agent (B) is selected from Lewis acids.

As to the olefin polymer (A) containing epoxy groups, the expression means an olefin polymer wherein a unit containing epoxy group is incorporated. Such unit is referred herein as an "epoxy-group-containing monomer unit" and means an unsaturated compound comprising an epoxy group, preferably vinyl group containing compound bearing an epoxy group. Such compounds can be used as comonomers for copolymerising epoxy-containing monomers units to the olefin polymer (A) or can be grafted to the olefin polymer (A), as well known in the polymer field. Grafting and copolymerizing of epoxy-group containing monomer units can be made according to or analogously to the methods described in the literature. The olefin polymers (A) containing epoxy groups as well as the epoxy-group-containing monomer units are very well known (mentioned e.g. in JP 06-116362 of Nippon Petrochem Co. LTD and WO 2010040964 of Arkema France) and commercially available. As preferable examples of epoxy-containing monomer units, e.g. aliphatic esters and glycidyl ethers such as an allyl glycidyl ether, a vinyl glycidyl ether, a maleate or itaconate of glycidyl, a (meth)glycidyl acrylate, and alicyclic esters and glycidyl ethers, such as a 2-cyclohexene-1 - glycidylether, a cyclohexene-4,5-diglycidyl carboxylate, a cyclohexene-4 glycidyl carboxylate, a 5-norbornene-2-methyl-2-glycidyl carboxylate and a endo cis-bicyclo (2,2,1) - 5-heptene-2,3-diglycidyl dicarboxylate, can be mentioned.

In the present invention the epoxy-containing monomer unit is preferably incorporated as a comonomer, i.e. by copolymerising an olefin monomer with the vinyl group containing comonomer bearing an epoxy group (=epoxy-group-containing monomer unit).

Most preferably, the epoxy-group-containing monomer units are glycidyl methacrylate comonomer units.

Preferably, the amount of epoxy-group-containing monomer units is at least 0.1 wt%, more preferably at least 0.3 wt%, more preferably at least 0.5 wt%, based on the amount of olefin polymer (A).

The content of epoxy-group-containing monomer units is preferably 10 wt% or less, preferably 7.0 wt%, more preferably 5.0 wt% or less and most preferably 3.0 wt% or less, based on the amount of olefin polymer (A).

The suitable olefin polymer (A) can be a homopolymer or a copolymer of an olefin, wherein the epoxy-group-containing monomer units are grafted as defined above, or a copolymer of an olefin at least the epoxy-group-containing monomer units as defined above. Preferred olefin polymer (A) is a copolymer of an olefin with at least the epoxy-group-containing monomer units as defined above, more preferably a copolymer of an olefin with at least glycidyl methacrylate comonomer units.

The olefin polymer (A) may comprise further comonomer(s) different from epoxy-group containing monomer units, and if present, then preferably polar comonomer(s) different from epoxy-group containing monomer units. In case olefin polymer (A) comprises polar comonomer(s), then the polar group containing monomer units are preferably present in an amount of at least 5.0 wt%, more preferably of at least 8 wt%, more preferably of at least 12 wt%, and most preferably of at least 15 wt% based on the amount of olefin polymer (A). In case olefin polymer (A) comprises polar comonomers, then, preferably, the polar group containing monomer units are present in an amount of not more than 50 wt%, more preferably not more than 45 wt% even more preferably of not more than 40 wt% and most preferably of not more than 35 wt% based on the amount of olefin polymer (A).

Preferably, the polar group containing monomer units are selected from acrylates or acetate comonomer units, preferably from alkyl (meth)acrylate or vinyl acetate comonomer units, preferably alkyl (meth)acrylate comonomer units.

In the present invention the term "alkyl (meth)acrylate comonomer units" encompasses alkyl acrylate comonomer units and/or alkyl methacrylate comonomer units.

The alkyl moiety in the alkyl(meth)acrylate comonomer units is preferably selected from C1 to C4-hydrocarbyls, whereby the C3 or C4 hydrocarbyl may be branched or linear.

Preferred olefin polymer (A) is polyethylene comprising epoxy-groups-containing monomer units, more preferably a copolymer of ethylene with at least the epoxy-group-containing monomer units as defined above, more preferably with at least glycidyl methacrylate comonomer units.

The copolymer of ethylene with at least the epoxy-group-containing monomer units as the preferable olefin polymer (A) is referred herein also shortly as ethylene/epoxy copolymer.

The ethylene/epoxy copolymer may further comprise further comonomer units.

It is preferred that the olefin polymer (A) is a copolymer of ethylene with at least epoxy-groups containing comonomer and optionally with other comonomer(s), different from epoxy-group containing monomer units, which other comonomer is preferably a polar comonomer different from epoxy-group containing monomer units, more preferably an acrylate or acetate group containing comonomer units. More preferably the olefin polymer (A) is selected from an ethylene copolymer with glycidyl methacrylate comonomer units or an ethylene copolymer with glycidyl methacrylate comonomer units and a polar comonomer selected from alkyl(meth)acrylate or a vinyl acetate comonomer units, even more preferably from an alkyl acrylate or a vinyl acetate comonomer units, even more preferably from a methyl acrylate, ethyl acrylate, butyl acrylate or vinyl acetate comonomer units, most preferably from a methyl acrylate, an ethyl acrylate or butyl acrylate comonomer units. Most preferably the olefin polymer (A) is selected from ethylene copolymer with glycidyl methacrylate comonomer units or ethylene copolymer with glycidyl methacrylate comonomer units and C1-C4 alkyl acrylate comonomer units, preferably methyl acrylate comonomer units. Moreover, the most preferred ethylene/epoxy copolymer for the (semiconductive) polyolefin composition is an ethylene copolymer with a polar comonomer units as defined above, preferably an ethylene-C1-C4 alkyl acrylate-glycidyl methacrylate copolymer, preferably ethylene-methyl acrylate-glycidyl methacrylate copolymer ,and glycidyl methacrylate. Moreover, the most preferred ethylene/epoxy copolymer for the polyolefin composition (b) is selected from ethylene copolymer with glycidyl methacrylate comonomer units or ethylene copolymer with methyl acrylate comonomer units and glycidyl methacrylate comonomer units , more preferably from an ethylene copolymer with glycidyl methacrylate comonomer units.

The ethylene polymer as the preferred olefin polymer (A) has a melt flow rate MFR2, determined according to ISO 1133 under a load of 2.16 kg and a temperature of 190°C, of at least 0.1 g/10 min, more preferably of at least 0.5 g/10 min. More preferably such ethylene polymer has a melt flow rate MFR2, determined according to ISO 1133 under a load of 2.16 kg and a temperature of 190°C, of 75 g/10 min or less, more preferably 60 g/10 min or less, even more preferably 55 g/10 min or less.

The ethylene polymer as the preferred olefin polymer (A) has a density of higher than 860 kg/m³. Preferably such ethylene polymer has a density of not higher than 960 kg/m³, and preferably of not higher than 955 kg/m³.

The preferred ethylene polymer as olefin polymer (A) is preferably low density ethylene polymer (LDPE) produced in a high pressure (HP) process in a tubular or autoclave reactor or in any combination thereof, both in case the epoxy-group-containing monomer units are grafted to a homopolymer or copolymer of ethylene after the production of the ethylene polymer as olefin polymer (A), and in case the epoxy-group-containing monomer units are copolymerised with ethylene and optionally with other comonomer(s). Hence, in case the epoxy-group containing monomer units are introduced by grafting the polymer prior to grafting may also be produced by this process.

Accordingly, the olefin polymer (A) of the invention is preferably a LDPE polymer, which is preferably produced at high pressure by free radical initiated polymerisation. The high pressure (HP) polymerisation is widely described in the literature and the adjustment of process conditions for further tailoring the other properties of the polyolefin depending on the desired end application is within the skills of a skilled person.

In a tubular reactor the polymerisation is effected at temperatures which typically range up to 400°C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps. Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

The autoclave process may, for example, be conducted in a stirred autoclave reactor. The stirred autoclave reactor is commonly divided into separate zones. The main flow pattern is from top zone(s) to bottom zone(s), but backmixing is allowed and sometimes desired. The stirrer is preferably designed to produce efficient mixing and flow patterns at a suitable speed of rotation selected by a person skilled in the art. The compressed mixture is commonly cooled and fed to one or more of the reactor zones. Radical initiators may also be injected at one or more zones along the reactor. As radical initiator, any compound or a mixture thereof that decomposes to radicals at an elevated temperature can be used. Usable radical initiators are commercially available. The polymerization pressure is typically 20 to 300, such as 20 to 250, MPa. The polymerization reaction is exothermic and after startup (at elevated temperature, e.g. from 80 to 150 °C to create the first radicals) the exothermic heat generated sustains the reaction. Temperature in each zone is controlled by the cooled incoming feed mixture. Suitable temperatures range from 80 to 300 °C. The process is well known to a skilled person and described e.g. in WO2010040964 of Arkema France, page 11, lines 23-32, and page 12, lines 1-8, or can be produced analogously as described e.g. in FR2498609, FR2569411 and FR2569412. Such autoclave polymerisation is preferred, when ethylene is copolymerized with the epoxy-group-containing monomer as defined above, preferably with glycidyl methacrylate comonomer, and optionally, and preferably, with other comonomer(s), preferably with a polar comonomer as defined above, more preferably alkyl (meth)acrylate, more preferably methyl acrylate, comonomer.

Furthermore, the olefin polymer (A) may be present in the polyolefin composition in an amount of at least 5 wt%, preferably at least 10 wt%, more preferably of at least 20 wt%, based on the total amount of the polyolefin composition. Usually the olefin polymer (A) is present in the semiconductive polyolefin composition in an amount of of 90 wt% or less, preferably 85 wt% or less, more preferably from 80 wt% or less, even more preferably from 10 to 75 wt%, even more preferably from 20 to 70 wt%, still more preferably from 30 to 65 wt%, based on the total amount of the polyolefin composition.

The amount of the conductive filler is at least such that a semiconducting polyolefin composition is obtained. The amount of the conductive filler can vary depending on the type of the used conductive filler, the conductivity of the composition and desired end use.

Preferably, the volume resistivity of the composition, determined according to ISO 3915 (1981) at room temperature, is not higher than 100000 ohm*cm, preferably not higher than 1000 ohm*cm

Preferably, the conductive filler is present in an amount of at least 10 wt%, preferably at least 15 wt%, even more preferably at least 20 wt. and most preferably at least 30 wt% based on the total amount of polyolefin composition.

The conductive filler is preferably present in an amount of 50 wt% or less, more preferably 45 wt% or less and most preferably 40 wt% or less based on the amount of polyolefin composition.

It is preferred that the conductive filler is carbon black.

Any electrically conductive carbon black can be used as the preferred conductive filler. Preferably, the carbon black may have a nitrogen surface area (BET) of 5 to 400 m²/g determined according to ASTM D3037-93.

Further preferably the carbon black has one or more of the following properties: i) a primary particle size of at least 5 nm which is defined as the number average particle diameter according to ASTM D3849-95a procedure D, ii) iodine number of at least 10mg/g, preferably of from 10 to 200 mg/g, more preferably of from 10 to 100 mg/g, when determined according to ASTM D-1510-07; and/or iii) DBP (dibutyl phthalate) absorption number of from 60 to 300 cm³/100g, preferably of from 80 to 270, preferably 90 to 250 cm³/100g, when measured according to ASTM D 2414-06a. Preferably, the carbon black has the nitrogen surface area (BET) and the features (i), (ii) and (iii) as defined above.

Preferred carbon blacks are furnace carbon blacks and acetylene blacks, furnace carbon black is especially preferred, since less costly.

The semiconductive polyolefin composition according to the present invention may optionally comprise a polymer (C) which is an alpha-olefin homo- or copolymer comprising
- alpha-olefin monomer units (Q) selected from one C₂ to C₁₀ alpha-olefin; and
- optionally, monomer units (R) selected from one or more alpha-olefin(s) different from (Q).

In case of the polymer (C) is a homopolymer, then it consists of alpha-olefin monomer units (Q) whereby polyethylene, polypropylene or polybutylene are preferred.

Preferably, the polymer (C) is a copolymer. In this embodiment preferably one or more monomers (R) are present as comonomer in the polymer (C). Thus, the polymer (C) may also contain three or more different monomeric alpha-olefin units. Usually the polymer (C) does not contain more than five different monomeric units. For example, the polymer (C) may be a terpolymer of three alpha-olefins, such as an ethylene-propylene-alpha-olefin(e.g.butene) terpolymer or propylene-ethylene-alpha-olefin(e.g. butene) which may have elastomeric properties.

Alpha-olefin monomer units (Q) may preferably be contained in the polymer (C) in an amount of 50 wt% or more, more preferably in an amount of from 70 to 99 wt%, based on the amount of the polymer (C).

Preferably, the total amount of monomers (R) based on the amount of the polymer (C) is 50 wt% or less, still more preferably 30 wt%. It is further preferred that total amount of monomers (R) based on the amount of the polymer (C) is 1 wt% or more.

For clarification it shall be noted that in case one of monomer units (R) being ethylene, monomer units (Q) cannot be ethylene due to the above definition that (Q) and (R) are different.

Preferably, alpha-olefin monomer units (Q) are selected from one of C3-C10 alpha-olefins, more preferably from one of C3-C6 alpha-olefins, even more preferably from one of C3-C4alpha-olefins and most preferably are propylene monomers.

Alpha-olefin monomer units (R) are preferably selected from one or more of C2 and C4-C10 alpha-olefin monomer units, more preferably from one or more of C2 and C4-C6 alpha-olefin monomer units, even more preferably from C2 and/or C4 alpha-olefin monomer units and most preferably alpha-olefin monomer units (R) are at least 1-butene monomer units.

In a preferred polymer (C), monomer units (Q) are propylene monomer units.

In case the polymer (C) comprises two type of monomer (R), preferably these two comonomers are ethylene and 1-butene. Hence, preferably the polymer (C) is a propylene random copolymer or a heterophasic propylene copolymer. A heterophasic propylene copolymer comprises a propylene matrix phase, which is a homopolymer of propylene or random copolymer of propylene, and a rubber phase, such as a propylene-alpha-olefin rubber, e.g. a propylene-butene rubber, wherein the rubber phase is dispersed into the propylene matrix phase, as well known in the art.

Preferably, the polymer (C) comprises not more than two type of monomer (R), more preferably one comonomer (R), which is preferably 1-butene. A more preferable polymer (C) is a random copolymer of 1-butene.

The melting point of the polymer (C) is preferably 165 °C or less, more preferably is 150 °C or less, more preferably 140 °C or less, even more preferably 85 °C or less. The melting point of the polymer (C) should preferably not be lower than 50 °C.

Preferably, the polyolefin composition which is preferably a semiconductive polyolefin composition, comprises the polymer (C) in an amount of 1 wt% or more, more preferably of 3 wt% or more, based on the total amount of the polyolefin composition.

Furthermore, the polyolefin composition which is preferably a semiconductive polyolefin composition , preferably comprises the polymer (C) in an amount of 45 wt% or less, more preferably of 35 wt% or less, and most preferably of 25 wt% or less, even more preferably 15 wt% or less, in some embodiments even 10 wt% or less.

The melt flow rate MFR2, measured at 230 °C according to ISO 1133, of the polymer (C) is preferably from 0.5 to 50 g/10 min, more preferably from 3 to 35 g/10min.

The alpha-olefin homo- or copolymer (C) may preferably have a density of 915 kg/cm3 or lower, more preferably of 900 kg/cm3 or lower.

A suitable catalyst for the polymerization of the alpha-olefin homo- or copolymer (C) is preferably a well known Ziegler-Natta catalyst or a single-site catalyst, preferably a stereospecific single-site catalyst for olefin polymerization. The polymerization is preferably carried out at temperature of 40 to 130°C and at a pressure from 5 to 100 bar. Suitable single-site catalysts are metallocene single-site catalysts as described for example in EP 1741725 A1 and EP 0943631 A1. Any conventional polymerization process can be used for producing the polymer (C), such as a solution process, slurry process, gas phase process, or any combinations thereof, which are well documented in the literature.

The polymer (C) preferably further contributes to the strippability (peelability) property, which is beneficial e.g. for the strippable outer semicon applications in wire and cable. Polymer (C) can also provide elastomeric properties to the final polyolefin composition, which is beneficial e.g in wire and cable applications.

The polyolefin composition, preferably the preferred semiconductive polyolefin composition, according to the present invention may optionally comprise an elastomeric component (D). Preferably the elastomeric component (D) comprises, or consist of, a nitrile rubber, preferably a nitrile-diene rubber, typically but not necessarily acrylonitrile-butadiene rubber (NBR). As the diene isoprene may also be used. As polymer (C), also the elastomer (D) preferably further contributes to the desirable strippability property.

The inventive composition may further comprise polymer (C) or polymer (D) or mixtures thereof.

The elastomeric component (D) may be contained in the polyolefin composition, preferably the preferred semiconductive polyolefin composition, in an amount of not more than 30 wt%, more preferably not more than 20 wt%, even more preferably not more than 10 wt%, based on the total amount of the polyolefin composition . In case the component (D) is present it is usually present in an amount of at least 0.5 wt% based on the total amount of the polyolefin composition.

If the elastomeric component (D) is contained in the polyolefin composition, preferably the preferred semiconductive polyolefin composition, , it is preferable to incorporate also a compabilitiser, a lubricant like a wax, stearate or silicone etc. and/or a parting agent (anti-caking agent) to improve the homogeneity and the free flowing properties of the polyolefin composition, preferably the preferred semiconductive polyolefin composition.

Naturally, in addition to crosslinking agent (B) the polyolefin composition may comprise further crosslinking agents for epoxy-crosslinking the olefin polymer (A), such as peroxides or, and preferably, crosslinking agents (B1) selected from alcohols comprising at least two OH groups, amines comprising one or preferably two amino groups, anhydrides of carboxylic acids and carboxylic acids, or any mixtures thereof. Such crosslinking agents different from crosslinking agent (B) are described e.g. in the abovementioned JP06-116362. However, preferably such additional crosslinking agents are not present.

The polymer composition may also comprise, and preferably comprises, further additives. As possible further additive(s), antioxidants, scorch retarders, crosslinking modulating (e.g. boosting or inhibiting) agents, stabilisers, processing aids, lubricants, compatibilizers, parting agents, anti-caking agents, flame retardant additives, acid scavengers, inorganic fillers, voltage stabilizers, additives for improving water tree resistance, or mixtures thereof can be mentioned.

More preferably the olefin polymer (A), the optional polymer (C), if present, or the optional elastomer (D), if present, are the only polymer component(s) present in the polyolefin composition. However, it is to be understood herein that the polyolefin composition may comprise further components different from the polyolefin (A), the optional polymer (C) and optional elastomer (D), such as the conductive filler or optional additive(s), which may optionally be added in a mixture with a carrier polymer, i.e. in so called master batch.

The present invention is also directed to a composition which has been formed of the above composition,

In the present invention the term "formed of" encompasses also the case where the composition has been subjected to conditions under which crosslinking of the epoxy-groups promoted by the crosslinking agent (B) takes place.

The semiconductive polyolefin composition preferably has been subjected to conditions wherein crosslinking of the epoxy groups by the crosslinking agent (B) has occurred.

Preferably, the crosslinking of the epoxy groups by the crosslinking agent (B) is carried out at a temperature of at least 150°C, more preferably at least 200 °C. Usually the temperature is not higher than 360°C.

The crosslinking of the epoxy groups by the crosslinking agent (B) is preferably carried out at a pressure of at least 10 bar, more preferably at least 20 bar. Usually the pressure is not higher than 100 bar.

The invention further provides an article comprising the polyolefin composition.

The preferred article is a cable, selected from
- a cable (CAB_A) comprising a conductor surrounded by at least one semiconductive layer, wherein the semiconductive layer comprises, preferably consists of, the semiconductive polyolefin composition comprising,
   - an olefin polymer (A) comprising epoxy-groups;
   - a conductive filler, preferably carbon black; and
   - at least one crosslinking agent (B) which accelerates the crosslinking reaction of epoxy-groups and which is selected from
      (i) Lewis acids,
      (ii) Brönsted acids different from carboxylic acids; or
      (iii) any mixtures thereof, as defined above or in claims; or
- a cable (CAB_B) which is preferably a power cable, comprising a conductor surrounded by at least an inner semiconductive layer, an insulation layer and an outer semiconductive layer, in that order, wherein at least the outer semiconductive layer comprises, preferably consists of, the semiconductive polyolefin composition comprising
   - an olefin polymer (A) comprising epoxy-groups;
   - a conductive filler, preferably carbon black; and
   - at least one crosslinking agent (B) which accelerates the crosslinking reaction of epoxy-groups and which is selected from
      (i) Lewis acids,
      (ii) Brönsted acids different from carboxylic acids; or
      (iii) any mixtures thereof, as defined above or in claims.

The term "surrounded" encompasses that the respective layer is directly attached to the conductor as well as that one or more further layers are present between the respective layer and the conductor.

The term "conductor" means herein above and below that the conductor comprises one or more wires. The wire can be for any use and be e.g. optical, telecommunication or electrical wire. Moreover, the cable may comprise one or more such conductors. Preferably the conductor is an electrical conductor and comprises one or more metal wires.

The cable is preferably a power cable, preferably a power cable operating at voltages 6 kV to 36 kV and known as medium voltage (MV) cables, at voltages higher than 36 kV, known as high voltage (HV) cables or extra high voltage (EHV) cables, and most preferably a MV cable. The terms have well known meanings and indicate the operating level of such cables.

The preferred cable of the invention is the cable (CAB_B) as defined above or below, which is preferably a power cable as defined above.

Moreover the outer semiconductive layer of the cable (CAB_B) can be strippable (peelable) or bonded (not peeled off), which terms have a well known meaning.

In the present invention "strippable" denotes that the semiconductive layer has a strip force of 8 kN/m or less, when measured according to "Strip force 90°" as described below under "Determination methods".

It is preferred that at least the outer semiconductive layer of the cable (CAB_B) comprises, preferably consists of the polyolefin composition of the invention as defined above.

After crosslinking the crosslinked polyolefin composition of the invention provides very advantageous strippability properties to the outer semiconductive layer.

Accordingly, the preferred outer semiconductive layer of the cable (CAB_B) comprising the polyolefin composition is preferably strippable and, optionally, may further comprise a polymer (C) or an elastomer (D), or any mixtures thereof, as defined above.

In one very preferable embodiment of the cable (CAB_B) of the invention also the insulation composition of the insulation layer is epoxy-crosslinkable and comprises a polyolefin (A) as defined above and a crosslinking agent which can be the crosslinking agent (B) or other epoxy-crosslinking agent (B1) which is preferably selected from alcohols comprising at least two OH groups, amines comprising one or preferably two amino groups, anhydrides of carboxylic acids and carboxylic acids, or any mixtures thereof. The cross-linking agent used in the semiconductive layer and the insulation layer may be chosen from the same or different embodiments of the cross-linking agent (B) as defined above.

Moreover, the inner semiconductive layer of the cable (CAB_B) may be non-crosslinkable, i.e. it is not crosslinked with any added crosslinking agent, or it can be crosslinkable. If the polymer composition of the inner semiconductive is crosslinkable, then it can be crosslinked using any means, such as well known crosslinking via well known free radical reaction, such as by using peroxide; via well known hydrolysis and subsequent condensation reaction in the presence of a silanol- condensation catalyst and H₂O for crosslinking hydrolysable silane groups present in the polymer composition; or via epoxy groups present in the polymer composition.

In the above preferable embodiment of the cable (CAB_B)of the invention, wherein the insulation layer is also epoxy-crosslinkable and is crosslinked before end use, then the inner semiconductive layer of the cable is preferably not crosslinked (i.e.contains no crosslinking agent added for the purpose of crosslinking the inner semiconductive layer), or is also epoxy-crosslinkable and comprises a polyolefin (A) as defined above and a crosslinking agent which can be the crosslinking agent (B) or other epoxy- crosslinking agent which is preferably selected from alcohols comprising at least two OH groups, amines comprising one or preferably two amino groups, anhydrides of carboxylic acids and carboxylic acids, or any mixtures thereof as mentioned above.

A process for producing an article, preferably a cable comprising a conductor surrounded by at least a semiconductive layer, is also provided, wherein the article, preferably the semiconductive layer of the cable is produced using the polyolefin composition as defined above or in claims.

The preferred process is for producing
- a cable (CAB_A), wherein the process comprises the steps of
   (a1) providing and mixing, preferably meltmixing in an extruder, a polyolefin composition, comprising, preferably consisting of,
      - an olefin polymer (A) comprising epoxy-groups;
      - a conductive filler, preferably carbon black; and
      - at least one crosslinking agent (B) which accelerates the crosslinking reaction of epoxy-groups and which is selected from
         (i) Lewis acids,
         (ii) Brönsted acids different from carboxylic acids; or
         (iii) any mixtures thereof, as defined above or in claims;
   (b1) applying a meltmix of the polymer composition obtained from step (a1), preferably by (co)extrusion, on a conductor to form at least one semiconductive layer; and
   (c1) optionally, and preferably, crosslinking the at least one semiconductive layer in the presence of the crosslinking agent (B) and at crosslinking conditions, which are preferably as defined below; or
      - a cable (CAB_B), which is preferably a power cable (CAB_B), comprising a conductor surrounded by an inner semiconductive layer, an insulation layer, and an outer semiconductive layer, in that order, as defined above or below, wherein the process comprises the steps of
         (a1)
            - providing and mixing, preferably meltmixing in an extruder, a first semiconductive composition comprising a polymer, a conductive filler, preferably carbon black, and optionally further component(s) for the inner semiconductive layer,
            - providing and mixing, preferably meltmixing in an extruder, a polymer composition for the insulation layer,
            - providing and mixing, preferably meltmixing in an extruder, a second semiconductive composition comprising a polymer, a conductive filler, preferably carbon black, and optionally further component(s) for the outer semiconductive layer;
         (b1)
            - applying on a conductor, preferably by coextrusion,
            - a meltmix of the first semiconductive composition obtained from step (a1) to form the inner semiconductive layer,
            - a meltmix of polymer composition obtained from step (a1) to form the insulation layer, and
            - a meltmix of the second semiconductive composition obtained from step (a1) to form the outer semiconductive layer,
               wherein at least the second semiconductive composition of the obtained outer semiconductive layer comprises, preferably consists of, a polyolefin composition comprising
               - an olefin polymer (A) comprising epoxy-groups;
               - a conductive filler, preferably carbon black; and
               - at least one crosslinking agent (B) which accelerates the crosslinking reaction of epoxy-groups and which is selected from
                  (i) Lewis acids,
                  (ii) Brönsted acids different from carboxylic acids;
                  (iii) or any mixtures thereof, as defined above or in claims; and
         (c1) optionally, and preferably, crosslinking at least the outer semiconductive layer in the presence of the crosslinking agent (B) and at crosslinking conditions, which are preferably as defined above.

Melt mixing means mixing above the melting temperature of at least the major polymer component(s) of the obtained mixture and is typically carried out in a temperature of at least 15°C above the melting or softening point of polymer component(s).

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads.

"Applied on a conductor" naturally means that the layer material is applied ((co)extruded) directly on a conductor or on a (polymeric) layer(s) around the conductor, depending on which layer is produced.

The polyolefin composition can be made in form of pre-made pellets, which are then used in the article, preferably cable, production process and provided to step (a1) of the preferable process. The pre-made pellets of the polyolefin composition can be produced in a known manner e.g. 1) by compounding, preferably meltmixing, the olefin polymer (A), the conductive filler and the crosslinking agent (B) and the obtained melt mixture is then pelletised in a well known pelletising device, or 2) pellets of the olefin polymer (A) and the conductive filler are first produced and then the crosslinking agent (B) is impregnated on the obtained pellets. Alternatively, all or part, e.g. the crosslinking agent (B), of the components of the polyolefin composition can be mixed together by the cable producer during the cable production process.

Preferably, the polyolefin composition is provided to the article, preferably cable, production process and to (melt)mixing step (a1) in form of pre-made pellets as described above. Any further components, such as the optional polymer (C) or elastomer (D) and/or additives which may optionally be added in a mixture with a carrier polymer, i.e. in so called master batch, can also be present in the pre-made pellets or added during the article, preferably cable, production process e.g. by the cable producer.

In the preferred process, the article, preferably the cable (CAB_A), more preferably the cable (CAB_B) which is preferably a power cable (CAB_B), is crosslinked in step (c1) for producing a crosslinked article, preferably a crosslinked cable (CAB_A), more preferably a crosslinked cable (CAB_B) which is preferably a crosslinked power cable (CAB_B).

The crosslinking is typically carried out at elevated temperatures, such as at least 150°C, more preferably at least 200 °C, and typically not higher than 360°C. Moreover, the pressure during the crosslinking is preferably at least 10 bar, more preferably at least 20 bar, and usually not higher than 100 bar.

Preferably, after crosslinking the hotset elongation of the layer is 175 % or less, more preferably 100 % or less and most preferably 50 % or less, when determined according to "Hot set elongation procedure" as described below under "Determination methods".

As well known the cable can optionally comprise further layers, e.g. layers surrounding the outer semiconductive layer, such as screen(s), a jacketing layer(s), other protective layer(s) or any combinations thereof.

The present invention is also directed to the use of a semiconductive polyolefin composition comprising, preferably consisting of,
- an olefin polymer (A) comprising epoxy-groups;
- a conductive filler, preferably carbon black; and
- at least one crosslinking agent (B) which accelerates the crosslinking reaction of epoxy-groups and which is selected from
   (i) Lewis acids,
   (ii) Brönsted acids different from carboxylic acids; or
   (iii) any mixtures thereof, as defined above or in claims,
for the production of a semiconductive layer of a cable.

### Determination methods

Unless otherwise stated in the description or claims, the following methods were used to measure the properties defined generally above and in the claims and in the examples below. The samples were prepared according to given standards, unless otherwise stated.
**Wt%** means % by weight.

### Melt flow rate

The melt flow rate was determined according to ISO 1133 for propylene copolymers at 230°C, at a 2.16 kg load (MFR₂) and for ethylene copolymers at 190°C, at a 2,16 kg load (MFR₂).

### Density

Low density polyethylene (LDPE): The density was measured according to ISO 1183-2. The sample preparation was executed according to ISO 1872-2 Table 3 Q (compression moulding).

Low process polyethylene: Density of the polymer was measured according to ISO 1183 / 1872-2B.

### Melting temperature

The melting temperature was determined according to ASTM D 3418.

### Strip force 90°

Cable samples of 10 cm up to 13.5 cm of length and 10 mm width were cut in cross sectional direction from a test cable which had an inner semiconductive layer with a thickness of 0.8 ± 0.05 mm, an insulation layer with a thickness of 5.5 ± 0.1 mm, and an outer semiconductive layer with a thickness of 1 ± 0.1 mm. The test cables were prepared according to the method as described below under "(b) Production of test cables". The strip force test can be made for test cable wherein said sample is in non-cross-linked or cross-linked form. The samples were conditioned for 16 hours to 2 weeks at 23 °C and 50% relative humidity. The separation of the outer semiconductive layer from the insulation was initiated manually. The cable was fixed to Alwetron TCT 25 tensile testing instrument (commercially available from Alwetron). The manually separated part was clamped onto a wheel assembly which is fixed to a moveable jaw of said instrument. The movement of the tensile testing machine causes the separation of said semiconductive layer from said insulation layer to occur. The peeling was carried out using a peeling angle of 90° and peeling speed of 500 mm/min. The force required to peel said outer semiconductive layer from the insulation was recorded and the test was repeated at least six times for each test layer sample. The average force divided by the width (10 mm) of the sample was taken as said strip force and the given values (kN/m at 90 °) represent the average strip force of the test samples, obtained from at least six samples.

### Oil adsorption number, (Dibutyl phthalate)

DBP adsorption number of the carbon black samples was measured in accordance with ASTM D2414-06a.

### Iodine number

: The iodine number of the carbon black samples was measured in accordance with ASTM D1510-07.

### Nitrogen Surface area (BET)

ASTMD3037-93

### Determination of comonomer content:

### Determination of polar comonomer content (FTIR)

Comonomer content of polar comonomers

### (1) Polymers containing > 6 wt% polar comonomer units

Comonomer content (wt%) was determined in a known manner based on Fourier transform infrared spectroscopy (FTIR) determination calibrated with quantitative nuclear magnetic resonance (NMR) spectroscopy. For the FTIR measurement a film of 0.5-0.7 mm thickness was prepared. After the analysis with FTIR, base lines in absorbance mode were drawn for the peaks to be analysed. The absorbance peak for the comonomer was normalised with the absorbance peak of polyethylene (e.g. the peak height for butyl acrylate or ethyl acrylate at 3450 cm⁻¹ was divided with the peak height of polyethylene at 2020 cm⁻¹). The NMR spectroscopy calibration procedure was undertaken in the conventional manner as described in Spectroscopy of Polymers, J.L.Koenig American Chemical Society, Washington DC, 1992. For the determination of the content of methyl acrylate a 0.10 mm thick film sample was prepared. After the analysis the maximum absorbance for the peak for the methylacrylate at 3455 cm⁻¹ was subtracted with the absorbance value for the base line at 2475 cm⁻¹ (A_{methylacrylate} - A₂₄₇₅). Then the maximum absorbance peak for the polyethylene peak at 2660 cm⁻¹ was subtracted with the absorbance value for the base line at 2475 cm⁻¹ (A₂₆₆₀ -A₂₄₇₅). The ratio between (A_{methylacrylate}-A₂₄₇₅) and (A₂₆₆₀-A₂₄₇₅) was then calculated in the conventional manner, as described in Spectroscopy of Polymers, J.L.Koenig American Chemical Society, Washington DC, 1992 which is hereby incorporated by reference.

For the determination of the content of Glycidyl methacrylate a 0.10 mm thick film sample was prepared. After the analysis the maximum absorbance for the peak for the methylacrylate at 911 cm⁻¹ was subtracted with the absorbance value for the base line at 2475 cm⁻¹ (A_{Glycidyl methacrylate} - A₂₄₇₅). Then the maximum absorbance peak for the polyethylene peak at 2660 cm⁻¹ was subtracted with the absorbance value for the base line at 2475 cm⁻¹ (A₂₆₆₀ -A₂₄₇₅). The ratio between (A_{Glycidyl methylacrylate}-A₂₄₇₅) and (A₂₆₆₀-A₂₄₇₅) was then calculated in the conventional manner, as described in Spectroscopy of Polymers, J.L.Koenig American Chemical Society, Washington DC, 1992 which is hereby incorporated by reference.

### (2) Polymers containing 6 wt% or less polar comonomer units

Comonomer content (wt%) was determined in a known manner based on Fourier transform infrared spectroscopy (FTIR) determination calibrated with quantitative nuclear magnetic resonance (NMR) spectroscopy. For the FT-IR measurement a film of 0.05 to 0.12 mm thickness was prepared. After the analysis with FT-IR base lines in absorbance mode were drawn for the peaks to be analysed. The maximum absorbance for the peak for the comonomer (e.g. for methylacrylate at 1164 cm⁻¹ and butylacrylate at 1165 cm⁻¹) was subtracted with the absorbance value for the base line at 1850 cm⁻¹ (Aₚₒₗₐᵣ comonomer - A₁₈₅₀). Then the maximum absorbance peak for polyethylene peak at 2660 cm⁻¹ was subtracted with the absorbance value for the base line at 1850 cm⁻¹ (A₂₆₆₀ - A₁₈₅₀). The ratio between (A_{comonomer}-A₁₈₅₀) and (A₂₆₆₀-A₁₈₅₀) was then calculated. The NMR spectroscopy calibration procedure was undertaken in the conventional, as described in Spectroscopy of Polymers, J.L.Koenig American Chemical Society, Washington DC, 1992.

### Quantification of comonomer content by NMR spectroscopy (polymer (C))

The comonomer content of polymer (C) was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York which is hereby incorporated by reference). Experimental parameters were adjusted to ensure measurement of quantitative spectra for this specific task (e.g "200 and More NMR Experiments: A Practical Course", S. Berger and S. Braun, 2004, Wiley-VCH, Weinheim which is hereby incorporated by reference). Quantities were calculated using simple corrected ratios of the signal integrals of representative sites in a manner known in the art.

### Hotset elongation and hotset permanent deformation

Hot set elongation and permanent deformation are determined on dumbbells prepared according to ISO-527-2-5A. Dumbbells were taken either by already crosslinked compressed plaques prepared as described below or extruded crosslinked cables prepared as described below under "(b) Production of test cables". The each test sample is specified in experimental part.

Compressed plaques are prepared as follows: Pellets of the test polyolefin composition were compression moulded using the following conditions: First, the pellets were melted at 120°C at around 20 bar for 1 minutes. Then the pressure was increased to 200 bar, and kept at the pressure and temperature for 6 min. Then material was cooling down to room temperature at rate of 15°C/min at 200 bars. The thickness of the plaque was around 1.8 mm.

Then plaques were crosslinked as follows: plaques were compression moulded at 300°C for 3 min and 30 secs at 20 bars. Then plaques were cooling down to room temperature at rate 50°C/min at 20 bars. This simulates the conditions in a cable vulcanisation line.

The hot set elongation as well as the permanent deformation were determined according to IEC 60811-2-1.on dumbbell samples as prepared as described above (either from the above mentioned crosslinked plaques or from the above mentioned outer semiconductive layer peeled from a test cable sample prepared as described below under "(b) Production of test cables" and the nature of the sample being specified in context. In the hot set test, a dumbbell of the tested material is equipped with a weight corresponding to 20 N/cm². This specimen is put into an oven at 200°C and after 15 minutes, the elongation is measured. Subsequently, the weight is removed and the sample is allowed to relax for 5 minutes. Then, the sample is taken out from the oven and is cooled down to room temperature. The permanent deformation is determined.

### Volume resistivity

The volume resistivity of the semiconductive material is measured on crosslinked polyethylene cables according to ISO 3915 (1981). Cable specimens cut from the produced test cable have a length of 13.5 cm are conditioned at 1 atm and 60 +- 2 °C for 5 +- 0.5 hours before measurement. The resistance of the outer semiconductive layer is measured using a four- terminal system using metal wires pressed against the semiconductive layer. To measure the resistance of the inner semiconductive layer, it is necessary to cut the cable in two halves, removing the metallic conductor. The resistance between the conductive silver paste applied onto the specimen ends is then used to determine the volume resistivity of the inner semiconductive layer. The measurements were carried out at room temperature and 90 °C. The same procedure is used to determine the volume resistivity of compositions that have not yet been cross-linked.

### Volatility of By-products

The Thermogravic analysis measurements were run ramping from 25°C to 400°C (10°C/min).

Thermogravic analysis instrument used was TGA Q5000 V 3.8 Build 256. Samples used were pellets of the test polymer composition, inventive compositions or reference compositions, as specified in experimental part and compounded as described below under "2. Materials,(a) compounding of the compositions". The amount of the used test pellet samples were weighted between 5 and 15 mg. Then instrument was run using the following program under nitrogen:
Starting temperature was between 30-40°C for 10-30 min then ramping up at 10°C /min up to 400°C. The lost weight after the above test run method was the indication of the volatiles.

### 2. Materials

The ingredients given in the following were used for the preparation of the polyolefin compositions. All amounts are given in weight percent.

### (a) compounding of the compositions

The components of the compositions were those of the polyolefin composition under test. The test polyolefin compositions used in the present experimental part were polyolefin compositions of inventive examples and the polyolefin compositions of reference examples as listed in the tables below.

The composition were compounded in a Buss mixer. Accordingly, the compounding operations were made in a 46 mm continuous Buss mixer. The tested polymer component(s) and croslinking agent and additives, if any, were charged to the first hopper of the mixer. The temperature in the first hopper was 140-190°C. The carbon black was charged into the subsequent second hopper and the mixing was continued at 170-190°C followed by pelletising.

### (b) Production of test cables

The test cables were prepared using a so-called "1 plus 2 extruder setup", in a Maillefer extruder, supplied by Maillefer. Thus, the inner semiconductive layer was extruded on the conductor first in a separate extruder head, and then the insulation and outer semiconductive layer are jointly extruded together on the inner semiconductive in a double extruder head. The inner and outer semiconductive extruder screw had a diameter of 45 mm/24D and the insulation screw had a diameter of 60 mm/24D.

The compositions used for the inventive and reference test plaques and cables are given in the below tables.

In all inventive and reference test cables the same polyethylene polymer composition containing carbon black and peroxide as the crosslinking agent was used as the inner semiconductive layer of the test cables. The used polymer composition is sold under the name LE0595 (Density 1135 kg/m³) supplied by Borealis

The same polyethylene polymer composition containing peroxide as the crosslinking agent was used in the insulation layer of the inventive test cables except in the inventive insulation composition IE14 (table 5) and reference test cables given in table 2. The polymer composition is sold under the name LE4201R (Density (Base Resin) 922 kg/m³, Melt Flow Rate (190 °C/2,16 kg) 2 g/10min) supplied by Borealis

The inventive compositions IE1-IE13 containing the conductive filler and IE14 containing no conductive filler, as well as reference compositions, were compounded according to procedure as described under "2. Materials, (a) compounding the compositions".

The inventive and reference cables of table 2 were produced at speed of 1.6 m/ min. 2 zones ("zone 1" and "zone 2") of 3 meter and the formed cable was then treated under nitrogen in a subsequent vulcanization tube with the following temperatures: "zone 1" 400 °C and "zone 2" 375 °C wherein the crosslinking of the inner semiconductive layer, the insulation layer and the outer semiconductive layer was completed. Then cables were cooled down to ambient temperature by using water. Finally cables were stored for 24 to 48 hours before analysis.

The inventive cable of table 5 was produced as described above for cables of table 2, except that temperature at the vulcanization tube was turned off for this case and the cable was crosslinked in a separated oven set up between 200-230 °C.

Finally all test cables were cooled down at room temperature for 1 h and stored for 24 to 48 hours before analysis.

Each test cable both in table 2 and 5 had the following properties:

| | Test cable construction |
|---|---|
| Conductor diameter | 50 mm² Al |
| Inner semiconductive layer, thickness | 0.8 ± 0.05 mm |
| Insulation layer , thickness | 5.5 ± 0.1 mm |
| Outer semiconductive layer, thickness | 1 ± 0.1 mm |

Details of the components of the used to prepare the inventive polyolefin compositions are given in the following.

Raw materials used as components of the inventive polymer compositions were commercially available or are conventional and can be produced by a skilled person using a conventional, well documented processes.
- Tafmer XM 5070MP, which is a commercial propylene/butylene copolymer having an MFR₂ (2.16 kg/230 °C) of 7 g/10 min and a melting point of 75°C. Supplied by Mitsui.
- GMA: conventional Ethylene-methyl acrylate-glycidyl methacrylate terpolymer (GMA) produced in a high pressure process in an autoclave reactor having a methyl acrylate content of 23.4 wt% and a glycidyl methacrylate content of 1 wt%, an MFR₂ (2.16 kg/190 °C) of 50 g/10 min and a melting point of 68.4 °C. For the preparation, reference is made to the above disclosure part, wherein the polymerization in autoclave process is described in relation to olefin polymer (A).
- Lotader AX8920, which is an ethylene-methyl acrylate-glycidyl methacrylate terpolymer having a methyl acrylate content of 28 wt% and a glycidyl methacrylate content of 1 wt%, an MFR₂ (2.16 kg/190 °C) of 6 g/10 min, a density of 950 kg/m³ and a melting point of 63°C. Supplied by Arkema.
- Lotader AX8900, which is an ethylene-methyl acrylate-glycidyl methacrylate terpolymer having a methyl acrylate content of 24 wt% and a glycidyl methacrylate content of 8 wt%, an MFR₂ (2.16 kg/190 °C) of 6 g/10 min, a density of 950 kg/m³ and a melting point of 60°C. Supplied by Arkema.
- Lotader AX 8840 which is a random polymer of ethylene-glycidyl methacrylate having a glycidyl methacrylate content of 8 wt%, an MFR₂ (2.16 kg/190 °C) of 5 g/10 min, a density of 940 kg/m³ and a melting point of 106°C. Supplied by Arkema.
- Perbunan 3435 supplied from Lanxess which is nitrile rubber with an acrylonitrile content of 34% and Mooney viscosity (ML(1+4)100°C) is 35
- Conventional N550 furnace carbon black which is commercially available (N550 is a carbon black classification according to ASTM D1765-D), having the following properties:

| **Oil adsorp no. (ml/100g)** | **Iodine nr. (mg/g)** |
|---|---|
| **ASTMD2414-06A** | **ASTM D1510-07** |
| **115-127** | **10- 80** |

- TMQ is TRIMETHYLQUINONE (CAS No. 935-92-2)
- ZINC STEARATE as process aid
- POX which is a conventional peroxide,
- Tyzor TE which is triethanolatoamine titanium isopropanolate (CAS number 74665-17-1) supplied by DuPont
- TYZOR NBZ which is zirconium tetrabutanolate (CAS number 1071-76-7) supplied by DuPont
- Exolit OP1230 which is tris(diethylphosphinato)aluminum (CAS number 225789-38-8) supplied by Clariant
- Aluminum distearate (CAS number 300-92-5)
- Dioctyltindilaureate (CAS number 3648-18-81)
- Titanium diisopropoxide bis(acetylacetonate) (CAS number 17927-72-9)
- Aradur 3380-1 (1,2,4-Benzenetricarboxylic anhydride (CAS number 552-30-7) distributed by Huntsman
- p-toluenesulfonic acid (CAS number 6192-52-5)
- Zinc (II) acetylacetonate hydrate (CAS number 108503-47-5)
- Copper(II) acetylacetonate (CAS number 13395-16-9)

**Table 1 Crosslinking parameters for crosslinked plaques, IE1- IE10= inventive example, Refer 1= reference example**

| | Structure of the crosslinking agent | Type of crosslinki ng agent | IE1 | IE2 | IE3 | IE4 | IE5 | IE6 | IE7 | IE8 | IE9 | IE10 | Refer 1 |
|---|---|---|---|---|---|---|---|---|---|---|---|---|---|
| Based on the total amount of the composition, wt% | | | | | | | | | | | | | |
| GMA | | | 55.6 | 55.4 | 55.6 | 55.4 | 54.9 | | 54.9 | 54.9 | 54.9 | 48.8 | |
| PERBUNAN 3435 | | | | | | | | | | | | 10 | |
| TAFMER XM5070 | | | 5 | 5 | 5 | 5 | 5 | 5 | 5 | 5 | 5 | - | |
| N-550 | | | 38.5 | 38.5 | 38.5 | 38.5 | 38.5 | 38.5 | 38.5 | 38.5 | 38.5 | 38.5 | |
| TMQ | | | 0.6 | 0.6 | 0.6 | 0.6 | 0.6 | 0.6 | 0.6 | 0.6 | 0.6 | 0.6 | |
| Lotader AX8900 | | | | | | | | 54.9 | | | | | |
| POX | | | | | | | | | | | | | 0.9 |
| ZINC STEARATE | | | | | | | | | | | | 1.8 | |
| Tyzor TE | 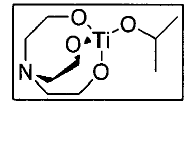 | Lewis acid (Ti) | 0.3 | | | | | | | | | 0.3 | |
| Titanium diisopropoxide bis(acetylacetonate) | 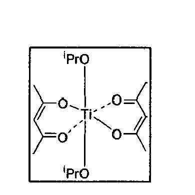 | Lewis acid (Ti) | | 0.5 | | | | | | | | | |
| Dioctyltin dilaurate | 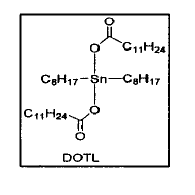 | Lewis acid (Sn) | | | 0.3 | | | | | | | | |
| Exolit OP1230 | 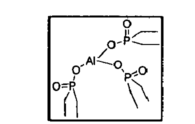 | Lewis acid (Al) | | | | 0.5 | | | | | | | |
| Aradur 3380-1 | 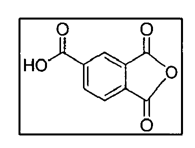 | anhydride | | | | | 1 | | | | | | |
| p-Toluene sulfonic acid | 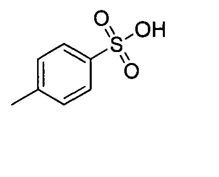 | Bronsted acid | | | | | | 1 | | | | | |
| zinc (II) acetylacetonate hydrate | 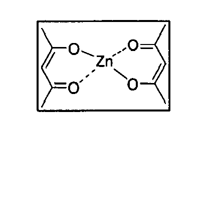 | Lewis acid (Zn) | | | | | | | 1 | | | | |
| Copper (II) acetylacetonate | 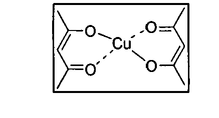 | Lewis acid (Cu) | | | | | | | | 1 | | | |
| 1,7-Diaminoheptane | 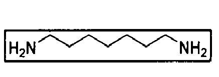 | Amine | | | | | | | | | 1 | | |
| crosslinking parameters measured from crosslinked test plaques | | | | | | | | | | | | | |
| Hotset Elongation [%] | | | 7 | 18 | 11 | 17 | 25 | 5 | 26 | 27 | 13 | 14 | 26 |
| Hotset Permanent deformation [%] | | | 0 | 0 | 0 | 0 | 3 | 0 | 4 | 5 | 0 | 1 | 0 |

Table 1 shows that using the crosslinking agent of the invention (inventive examples) instead of peroxide crosslinking agent (reference examples) provides at least comparable or even improved crosslinking properties. Furthermore crosslinking parameters of inventive examples are within the specifications given by the standards: IEC 60502-2) 2005; CENELEC **HD 620 2007** and ANSI/ICEA CS6-96. Crosslinking parameters were obtained on plaques prepared as described above for "Hotset elongation and hotset permanent deformation" method under "Determination methods".

**Table 2 Parameters for crosslinked semiconductive layer material of 20 kV test cables. The inner semiconductive and the insulation materials, as well as the cable production is described above under 2. Materials, (b) Production of test cables**

| | IE1 | IE11 | IE10 | Refer 1 | Refer 2 IE1 without crosslink. agent |
|---|---|---|---|---|---|
| | | | | | |
| | wt. % | wt. % | wt. % | wt. % | wt. % |
| | | | | | |
| GMA | 55.6 | 60.6 | 48.8 | | 55.9 |
| TAFMER XM5070 | 5 | | | | 5 |
| N-550 | 38.5 | 38.5 | 38.5 | | 38.5 |
| TMQ | 0.6 | 0.6 | 0.6 | | 0.6 |
| Tyzor TE | 0.3 | 0.3 | 0.3 | | - |
| POX | | | | 0.9 | |
| PERBUNAN 3435 | | | 10 | | |
| ZINC STEARATE | | | 1.8 | | |
| Sum of outer semicon layer | 100 | 100 | 100 | | 100 |

| **Cable properties** | | | | | |
|---|---|---|---|---|---|
| **Crosslinking parameters** | | | | | |
| Hotset Elongation [%] | 17 | 20 | | 25.9 | Broke |
| Permanent Deformation [%] | 1 | 0 | | 0 | n/a |

| **Semiconductive parameters** | | | | | |
|---|---|---|---|---|---|
| Semiconductivity VR [ohm*cm] @ room temperture | <1000 | <1000 | | <1000 | <1000 |

| **strippability parameters** | | | | | |
|---|---|---|---|---|---|
| Strip Force 90° [kN/m] | 1.3 | 1.9 | 1.5 | 3.6 | 1.8 |

In Table 2 inventive and reference compositions were used for making the outer semiconductive layer of 20KV test cables are exactly the same as in Table 1. Refer 2 is IE1, but does not contain any crosslinking agent. Inventive and reference compositions (also refer 2 without crosslinking agent) were all subjected to crosslinking conditions as described above for "(b) Production of test cables under "Determination methods".

Examples show that outer semiconductive layer of inventive examples were fully crosslinked and meet standards requirements. In addition IE11 shows the good crosslinking properties also in the absence of polymer (C) component (Tafmer) or (D) component (Perbunan). Refer 2 shows no crosslinking activity meaning that a catalyst or crosslinking agent is necessary in order to crosslinking reaction to occur. Furthermore all cables on Table 2 have semiconductive properties shown as volume resistivity (VR) property.

Moreover, Strip forces measured for a non-peroxide crosslinked inventive semiconductive examples show much better strippability parameters than peroxide crosslinked semiconductive reference (refer 1).

**Table 3 Volatiles parameters for outer semicon compositions**

| | IE12 | IE13 | Refer1 |
|---|---|---|---|
| | **wt%** | **wt%** | **wt%** |
| LOTADER AX8900 | 55.6 | | |
| LOTADER AX8920 | | 55.6 | |
| N-550 | 38.5 | 38.5 | |
| Tyzor TE | 0.3 | 0.3 | - |
| TAFMER XM5070 | 5 | 5 | |
| TMQ | 0.6 | 0.6 | |
| POX | | | 0.9 |

| **Volatility of By-products** | | | |
|---|---|---|---|
| Termogravimetry Analysis (TGA), Weight (%) | 96.3 | 97.2 | 85.1 |

As can be seen from table 3, the outer semiconductive compositions of Inventive examples (IE) show clearly better thermostability than peroxide crosslinked outer semiconductive composition refer 1, which is demonstrated by lesser amounts of volatiles of IE's measured by thermogravimetry analysis (TGA) as described above for "Volatility of By-products" under "Determination methods".

Table 4 and table 5 below show that the inventive polyolefin compositions comprising epoxy-crosslinking agent (B) or (B1), but without carbon black, can also be used in a layer of a cable. Additionally, the inventive polyolefin composition without carbon black can be used in an insulation layer of a cable. Moreover, such insulaton layer can be combined with a semiconductive cable layer(s) containing an inventive polyolefin composition, see table 5. The crosslinking parameters in below table 5 show that the inventive test cable is fully crosslinked also when the outer semiconductive layer and also the insulation comprise the the epoxy-crosslinking system of the invention.

**Table 4: Test plaque of Insulation composition (no carbon black)**

| | IE14 |
|---|---|
| Lotader AX 8840 | 94.5 |
| Aradur 3380-1 (anhydride) | 5.5 |
| | |

| **Crosslinking parameters** | |
|---|---|
| Hotset Elongation [%] | 21 |
| Permanent Deformation [%] | 0 |

**Table 5 Inventive Cable Example.**

| **Cable** | **Inventive cable** |
|---|---|
| **Outersemicon composition** | **IE1** |
| GMA | 55.6 |
| TAFMER XM5070 | 5 |
| N-550 | 38.5 |
| TMQ | 0.6 |
| Tyzor TE (Lewis acid) | 0.3 |
| | |

| **Crosslinking parameters** | |
|---|---|
| Hotset Elongation [%] | 19 |
| Permanent Deformation [%] | 1 |

| **Insulation composition** | **IE14** |
|---|---|
| Lotader AX 8840 | 94.5 |
| Aradur 3380-1 (anhydride) | 5.5 |

| **Crosslinking parameters** | |
|---|---|
| Hotset Elongation [%] | 69 |
| Permanent Deformation [%] | 0 |

## Claims

1. A semiconductive polyolefin composition comprising,
- an olefin polymer (A) comprising epoxy-groups;
- a conductive filler; and
- at least one crosslinking agent (B) which accelerates the crosslinking reaction of epoxy-groups and which is selected from
(i) Lewis acids,
(ii) Brönsted acids different from carboxylic acids; or
(iii) any mixtures thereof.

2. The semiconductive polyolefin composition according to claim 1 wherein the Lewis acids are compounds of the following formula (I)
M^{+m}Lₙ (I),
wherein
- M is an element selected from lanthanides or an element of groups 2 to 14 of the IUPAC periodic table (1989) except the elements of the group 7 of the IUPAC periodic table (1989) and Be, C, Si, Ge, Tl, Pb, Tc, Hg and Cd;
- each L is the same or different and is a ligand linked to M; and
- m is 1 to 4, and n is 1 to 4, with the proviso that m-n is 0;
more preferable a subgroup of Lewis acids of compounds of formula (I), wherein
- M is selected from lanthanides and an element of the groups 4, 11, 12, 13 and 14 of the IUPAC periodic table (1989) except the elements of the group 7 of the IUPAC periodic table (1989) and C, Si, Ge, Tl, Pb, Tc, Hg and Cd, more preferably M is an element selected from group 4, 11, 12, 13 or 14 as defined above, more preferably M is selected from Ti (titanium), Zr (zirconium), Hf (hafnium), Sn (tin), Al (aluminium), Cu (copper), Zn (zinc) and B(boron);
- each L is independently selected from
■ optionally substituted saturated or partially unsaturated hydrocarbyl group;
■ optionally substituted aromatic hydrocarbyl ring system;
■ two or more L are independently a divalent saturated or partially unsaturated hydrocarbyl group linked to the other ligand(s) L via a X atom and form together with M a ring system which may optionally be substituted, X is carbon or a hetero atom;
wherein
each hydrocarbyl group as L or in a ring system formed by two or more L may independently contain one or more heteroatoms selected from N, O, P, S or Si, preferably from one or more of N, O, P, and
the number of optional substituents, if present in any of L or the ring system formed by two or more L, is independently 1 to 4;
■ OH group;
■ halogen, preferably -F, -Cl, -Br, group;
■ CF₃S0₃- group;
■ methyl or ethyl methanesulfonate group; and
- m is 2 or 4, and n is 2 or 4 provided that m-n is 0;
and wherein
the optional substituents may be attached to a carbon or a heteroatom of the hydrocarbyl group,
and are preferably selected independently from a functional group which is preferably selected from one or more of =O, -OH, NR¹R², wherein R¹ or R² are H or C₁-C₁₂ alkyl; -COOR⁴, wherein R⁴ is H or C₁-C₁₂ alkyl -CONR⁵, wherein R⁵ is H or C₁-C₁₂ alkyl; halogen, which is preferably F, Cl or Br, -OH; methyl or ethyl methanesulfonate; CF₃SO₃- or from a hydrocarbyl with up to 20 carbon atoms in case of any ring system present in or formed by the hydrocarbyl.

3. The semiconductive polyolefin composition according to claim 2, wherein the Lewis acid is selected from a subgroup of the compounds of formula (I), wherein the substituted or unsubstituted saturated or partially unsaturated hydrocarbyl group as L is
(i) an optionally substituted linear or branched, saturated or partially unsaturated hydrocarbyl group with up to 30 carbon atoms; more preferably linear or branched C₁-C₂₀ alkyl; linear or branched C₂-C₂₀ alkenyl; or linear or branched C₂-C₂₀ alkynyl, more preferably linear or branched C₁-C₂₀ alkyl; or linear or branched C₂-C₂₀ alkenyl;
(ii) an optionally substituted linear or branched, saturated or partially unsaturated hydrocarbyl group which bears a saturated or partially unsaturated cyclic hydrocarbyl moiety or an optionally substituted linear or branched, saturated or partially unsaturated hydrocarbyl group which bears an aromatic hydrocarbyl moiety; preferably an optionally substituted linear or branched, saturated or partially unsaturated hydrocarbyl group which bears a saturated or partially unsaturated cyclic hydrocarbyl moiety; or
(iii) an optionally substituted saturated or partially unsaturated cyclic hydrocarbyl group wherein one or more ring atoms are optionally a heteroatom selected from N, O, P, S or Si, preferably N, O or P;
even more preferably the Lewis acid is selected from a subgroup of the compounds of formula (I), wherein said substituted or unsubstituted saturated or partially unsaturated hydrocarbyl group as L is more preferably
(i) an optionally substituted linear or branched, saturated or partially unsaturated hydrocarbyl group; more preferably linear or branched C₁-C₂₀ alkyl; linear or branched C₂-C₂₀ alkenyl; or linear or branched C₂-C₂₀ alkynyl, more preferably linear or branched C₁-C₂₀ alkyl; or linear or branched C₂-C₂₀ alkenyl;
(ii) an optionally substituted linear or branched, saturated or partially unsaturated hydrocarbyl group which bears a saturated or partially unsaturated cyclic hydrocarbyl moiety or an optionally substituted linear or branched, saturated or partially unsaturated hydrocarbyl group which bears an optionally substituted aromatic hydrocarbyl moiety, preferably an optionally substituted linear or branched, saturated or partially unsaturated hydrocarbyl group which bears a saturated or partially unsaturated cyclic hydrocarbyl moiety; or
(iii) an optionally substituted saturated or partially unsaturated cyclic hydrocarbyl group wherein one or more ring atoms are optionally a heteroatom selected from N, O, P, S or Si, preferably N, O or P.

4. The semiconductive polyolefin composition according to any of the preceding claims 2 or 3, wherein the Lewis acid is selected from a subgroup of compounds of formula (I), wherein
M is Ti, Zr, Hf ,Sn, Cu, Zn or Al, preferably Ti, Sn, Zn, Cu or Al; each L is a group comprising 1 to 30 carbon atoms and selected independently from
- optionally substituted hydrocarbyl with no heteroatoms;
- optionally substituted -O-hydrocarbyl group;
- -O-(C=O)-hydrocarbyl group;
- -O-(P=O)-hydrocarbyl group; or
- two or three L are -O-hydrocarbyl- linked to each other via a X atom, which is C or N atom, and form together with M a cyclic ring system; wherein each hydrocarbyl is independently as defined above; and
n is 4 in case of Ti, Zr, Hf or Sn; 3 in case of Al or B; and 2 in case of Cu or Zn; and
the most preferable Lewis acids are selected from a subgroup of compounds of formula (I), wherein
M is Ti, Sn, or Al, and most preferably Ti or Al;
each L is a group selected independently form
- linear or branched C₁-C₂₀ alkyl optionally bearing one or two, preferably one, if present, substituent(s) as defined above, preferably linear or branched C₁-C₂₀ alkyl;
- -O-(linear or branched C₁-C₂₀ alkyl) optionally bearing one or two, preferably one, if present, substituent(s) as defined above;
- -O-(linear or branched C₂-C₂₀ alkenyl) optionally bearing one or two, preferably one, if present, subsitutuent(s) as defined above, more preferably -O-(linear or branched C₂-C₂₀ alkenyl) optionally and preferably bearing one or two, preferably one, subsitutuent which is preferably (=O);
- -O-(P=O)-(linear or branched C₁-C₂₀ alkyl) optionally bearing one or two, preferably one, if present, substituent(s) as defined above;
- -O-(P=O)-(linear or branched C₂-C₂₀ alkenyl) optionally bearing one or two, preferably one, if present, substituent(s) as defined above, more preferably O-(P=O)-(linear or branched C₁-C₂₀ alkyl); or
- three L are independently -O-ethylene- each linked to X which is N and the three L form together with M a polycyclic ring system; and
n is 4 in case of Ti, Zr, Hf or Sn, 3 in case of Al or B and 2 in case of Cu or Zn; and
the preferred Lewis acids are selected from
triethanolatoamine titanium isopropanolate (CAS number 74665-17-1), zirconium tetrabutanolate (CAS number 1071-76-7), tris(diethylphosphinato)aluminium (CAS number 225789-38-8 ), Aluminum distearate (CAS number 300-92-5), Dioctyltindilaureate (CAS number 3648-18-81), titanium tristearate monoisopropanolate, zinc (II) acetylacetonate hydrate (CAS number 108503-47-5), copper (II) acetylacetonate (CAS number: 13395-16-9), titanium diacetylacetonate diisopropanolate (CAS number: 27858-32-8), Titanium(IV) butoxide (CAS number 5593-70-4), Titanium diisopropoxide bis(acetylacetonate) (CAS number 17927-72-9), Titanium isopropoxide (4) (CAS number 546-68-9); Tetrakis(2-ethylhexyl) orthotitanate (CAS number 1070-10-6), Tetrakis(triethanolaminato)zirconium(IV) (CAS number 101033-44-7), Zinc stearate (CAS number 557-05-1), Boron trifluoride ethylamine complex (CAS number 75-23-0). Most preferred Lewis acid is selected from triethanolatoamine titanium isopropanolate (CAS number 74665-17-1); tris(diethylphosphinato)aluminum (CAS number 225789-38-8 ); Titanium diisopropoxide bis(acetylacetonate) (CAS number 17927-72-9); Dioctyltindilaureate (CAS number 3648-18-81); Zinc (II) acetylacetonate hydrate (CAS number 108503-47-5) ; and Copper(II) acetylacetonate CAS number 13395-16-9. Even most preferred Lewis acid is selected from triethanolatoamine titanium isopropanolate (CAS number 74665-17-1).

5. The semiconductive polyolefin composition according to any one of the preceding claims, wherein Brönsted acid as the crosslinking agent (B) is an aromatic organic sulphonic acid which comprises the structural element:
Ar(SO₃H)ₓ (II)
wherein
Ar is an aryl group which may be substituted or non- substituted, and if substituted, then preferably with at least one hydrocarbyl group up to 50 carbon atoms, and x being at least 1, or a precursor of the sulphonic acid of formula (II) including an acid anhydride thereof or a sulphonic acid of formula (II) that has been provided with a hydrolysable protective group(s), e.g. an acetyl group that is removable by hydrolysis.

6. The semiconductive polyolefin composition according to any one of the preceding claims, wherein the crosslinking agent (B) is selected from Lewis acids, preferably from Lewis acids of formula (I) as defined in any of the preceding claims 2-4.

7. The semiconductive polyolefin composition according to any one of the preceding claims, wherein the olefin polymer (A) is a copolymer of ethylene with at least epoxy-groups containing comonomer units and optionally with other comonomer(s) different from epoxy-group containing monomer units, which other comonomer is preferably a polar comonomer different from epoxy-group containing monomer units, more preferably an acrylate or acetate group containing comonomer unit, more preferably the olefin polymer (A) is selected from an ethylene copolymer with glycidyl methacrylate comonomer units or an ethylene copolymer with polar comonomer units selected from an alkyl(meth)acrylate or a vinyl acetate comonomer unitsand glycidyl methacrylate comonomer units.

8. The semiconductive polyolefin composition according to any one of the preceding claims, wherein the amount of epoxy-group-containing monomer units is 0.1 to 10 wt% based on the amount of olefin polymer (A).

9. The semiconductive polyolefin composition according to any one of the preceding claims, which further comprises
a polymer (C) which is an alpha-olefin homo- or copolymer comprising
- alpha-olefin monomer units (Q) selected from one C₂ to C₁₀ alpha-olefin; and
- optionally, monomer units (R) selected from one or more alpha-olefin(s) different from (Q); or
an elastomer (D) which is preferably a nitrile rubber, or
any mixtures thereof.

10. The semiconductive polyolefin composition according to any one of the preceding claims, wherein the amount of the conductive filler is 10 to 50 wt% based on the total amount of the polyolefin composition, whereby, preferably, the conductive filler is carbon black.

11. The semiconductive polyolefin composition according to any one of the preceding claims, wherein the semiconductive polyolefin composition has been subjected to conditions wherein crosslinking of the epoxy groups by the crosslinking agent (B) has occurred.

12. An article comprising the polyolefin composition as defined in any of the preceding claims 1 to 11.

13. The article according to claim 12, which is a cable selected from
■ a cable (CAB_A) comprising a conductor surrounded by at least one semiconductive layer, wherein the semiconductive layer comprises, preferably consists of, the semiconductive polyolefin composition comprising,
- an olefin polymer (A) comprising epoxy-groups;
- a conductive filler, preferably carbon black; and
- at least one crosslinking agent (B) which accelerates the crosslinking reaction of epoxy-groups and which is selected from
(i) Lewis acids,
(ii) Brönsted acids different from carboxylic acids;
(iii) or any mixtures thereof,
as defined in any one of the preceding claims 1 to 11; or
■ a power cable (CAB_B) comprising a conductor surrounded by at least an inner semiconductive layer, an insulation layer and an outer semiconductive layer, in that order, wherein at least the outer semiconductive layer comprises, preferably consists of, the semiconductive polyolefin composition comprising
- an olefin polymer (A) comprising epoxy-groups;
- a conductive filler, preferably carbon black; and
- at least one crosslinking agent (B) which accelerates the crosslinking reaction of epoxy-groups and which is selected from
(i) Lewis acids,
(ii) Brönsted acids different from carboxylic acids; or
(iii) any mixtures thereof,
as defined in any of the preceding claims 1 to 11.

14. A process for producing
- a cable (CAB_A) comprising a conductor surrounded by at least one semiconductive layer, as defined in claim 13, wherein the process comprises the steps of
(a1) providing and mixing, preferably meltmixing in an extruder, a polyolefin composition, comprising
- an olefin polymer (A) comprising epoxy-groups;
- a conductive filler, preferably carbon black; and
- at least one crosslinking agent (B) which accelerates the crosslinking reaction of epoxy-groups and which is selected from
(i) Lewis acids,
(ii) Brönsted acids different from carboxylic acids; or
(iii) any mixtures thereof,
as defined in any of the preceding claims 1 to 11;
(b1) applying a meltmix of the polymer composition obtained from step (a1), preferably by (co)extrusion, on a conductor to form at least one semiconductive layer; and
(c1)_ optionally, and preferably, crosslinking the at least one semiconductive layer in the presence of the crosslinking agent (B);
or
- a power cable (CAB_B), comprising a conductor surrounded by at least an inner semiconductive layer, an insulation layer and an outer semiconductive layer, in that order, as defined in claim 13, wherein the process comprises the steps of
(a1)
- providing and mixing, preferably meltmixing in an extruder, a first semiconductive composition comprising a polymer, a conductive filler and optionally further component(s) for the inner semiconductive layer,
- providing and mixing, preferably meltmixing in an extruder, a polymer composition for the insulation layer,
- providing and mixing, preferably meltmixing in an extruder, a second semiconductive composition comprising a polymer, a conductive filler and optionally further component(s) for the outer semiconductive layer;
(b1)
- applying on a conductor, preferably by coextrusion,
- a meltmix of the first semiconductive composition obtained from step (a1) to form the inner semiconductive layer,
- a meltmix of polymer composition obtained from step (a1) to form the insulation layer, and
- a meltmix of the second semiconductive composition obtained from step (a1) to form the outer semiconductive layer,
wherein at least the second semiconductive composition of the obtained outer semiconductive layer comprises, preferably consists of, a polyolefin composition comprising
- an olefin polymer (A) comprising epoxy-groups;
- a conductive filler, preferably carbon black; and
- at least one crosslinking agent (B) which accelerates the crosslinking reaction of epoxy-groups and which is selected from
(i) Lewis acids,
(ii) Brönsted acids different from carboxylic acids; or
(iii) any mixtures thereof,
as defined in any of the preceding claims 1 to 11; and
(c1)
optionally, and preferably, crosslinking at least the outer semiconductive layer in the presence of the crosslinking agent (B) and at crosslinking conditions.

15. Use of a semiconductive polyolefin composition comprising
- an olefin polymer (A) comprising epoxy-groups;
- a conductive filler, preferably carbon black; and
- at least one crosslinking agent (B) which accelerates the crosslinking reaction of epoxy-groups and which is selected from
(i) Lewis acids,
(ii) Brönsted acids different from carboxylic acids;
(iii) or any mixtures thereof,
as defined in any of the preceding claims 1-11, for the production of a semiconductive layer of a cable.
